# EUROPEAN PATENT SPECIFICATION

(11) **EP 3 192 630 B1**
(45) Date of publication and mention of the grant of the patent: **07.04.2021**
(21) Application number: 15840636.3
(22) Date of filing: 08.09.2015
(51) Int. Cl.: B28B 3/26, B29C 48/11, B29C 48/70, B23P 15/24, B29C 48/02

(54) **EXTRUSION DIE**
EXTRUSIONSDÜSE
FILIÈRE D'EXTRUSION

(30) Priority: 08.09.2014 JP 2014182462
(43) Date of publication of application: 19.07.2017
(73) Proprietor: IBIDEN CO., LTD., Ogaki-shi, Gifu 503-8604 (JP)
(72) Inventor: ENOSHITA Shunpei, Ibi-gun Gifu 501-0695 (JP)
(74) Representative: Hoefer & Partner Patentanwälte mbB
(86) International application number: PCT/JP2015/075446
(87) International publication number: WO 2016/039330

(56) References cited:
- EP-A1- 0 402 593
- EP-A1- 1 384 508
- EP-A1- 1 787 969
- WO-A1-2007/058007
- WO-A1-2009/119422
- JP-A- H0 326 502
- JP-A- S6 453 808
- JP-A- S54 150 406
- JP-A- S60 212 323
- US-A- 4 259 057

## Description

### TECHNICAL FIELD

The present invention relates to an extrusion die.

### BACKGROUND ART

Particulates such as soot in exhaust gas emitted from internal combustion engines of vehicles (e.g., buses, tracks) or constructing machines cause damages to human bodies or the environment, which has been a concern in recent years. To counter this, various filters for capturing particulates in exhaust gas to purify exhaust gas have been proposed. Such a filter includes a honeycomb structured body consisting of one or more honeycomb fired bodies each including multiple cells arranged in parallel with one another in the longitudinal direction with a cell wall therebetween.

Conventionally known materials for honeycomb fired bodies include porous silicon carbide and cordierite, which are excellent in heat resistance and strength.

In the honeycomb structured body, low pressure loss is desired as its basic property. An effective means to reduce pressure loss is to increase the porosity or the aperture ratio, for example. Unfortunately, a high porosity ratio or a high aperture ratio leads to low strength. In view of this, for example, Patent Literature 1 discloses a honeycomb structured body including porous ceramic members, wherein, while the porosity ratio and the aperture ratio of the porous ceramic members are kept within certain ranges, the outer edge wall of the porous ceramic members has an increased thickness and the cells in the peripheral region are provided with fillers to fill in their corners. This structure allows the honeycomb structured body to ensure the strength while keeping the pressure loss low.

Generally, for the production of a honeycomb structured body, ceramic powder, a binder, and a dispersion medium are mixed to prepare a mixed composition for producing a molded body. This mixed composition is fed into an extruder equipped with an extrusion die and extruded into a rectangular pillar-shaped honeycomb molded body including a plurality of cells arranged in parallel with one another in the longitudinal direction with a cell wall therebetween. The obtained honeycomb molded body is next dried with a heater or the like, followed by a degreasing step to pyrolyze the binder in the honeycomb molded body and further followed by a firing step to fire the ceramic. Thus, a honeycomb fired body is produced. Finally, multiple such honeycomb fired bodies are bonded via an adhesive layer to produce a honeycomb structured body.

A known extrusion die for producing a honeycomb molded body has material supply holes for supplying a molding material and slits for molding the molding material into the shape of the honeycomb molded body, with the slits arranged in a grid shape to communicate with the material supply holes.

Patent Literature 2, for example, discloses an extrusion die having material supply holes formed to communicate with the intersections of the slits. In such an extrusion die, the molding material passes through the material supply holes to the intersection portions of the slits, and then flows along the slits from the intersection portions in such a way that it fills the slits. The molding material having passed through a material supply hole and the molding material having passed through a material supply hole adjacent thereto are then mixed together at the slit portion and are extruded to form a honeycomb shape.

Patent Literature 3 discloses a honeycomb structure constituted by porous cell walls which form a cell group consisting of a plurality of cells adjacent to each other, and a honeycomb outer wall which surrounds and holds the outermost peripheral cells located at the circumference of the cell group, characterized in that the porosity is 5% to less than 30%, the basic wall thickness (T_{c}) of the cell walls is 0.030 mm ≤ T_{c} < 0.076 mm, the average surface roughness (Raₛ) of the outer wall is 0.5 µm ≤ Raₛ ≤ 10 µm, and/or the average height (RzDINₛ) on the surface of the outer wall from a local maximum point to a next local minimum point is 5 µm ≤ RzDINₛ ≤ 50 µm; and a process for producing such a honeycomb structure using a raw material containing at least a talc component and a kaolin component, the talc component containing a coarse particle talc having an average particle diameter of 7 µm or more and a fine particle talc having an average particle diameter of 2/3 or less of that of the coarse particle talc, the kaolin component containing a coarse particle kaolin having an average particle diameter of 7 µm or more and a fine particle kaolin having an average particle diameter of 2/3 or less of that of the coarse particle kaolin. Thus, there can be provided a honeycomb structure which satisfies requirements of improved purification ability, erosion resistance and improved canning property at a good balance and which is suitably used particularly in a carrier for catalyst for purification of automobile exhaust gas, etc.

Patent Literature 4 discloses a honeycomb structured body in which the high aperture ratio and the strength can be secured, and the honeycomb structured body is a honeycomb structured body in which a plurality of porous ceramic members are combined with one another by interposing an adhesive layer, each of the porous ceramic members having a plurality of cells placed in parallel with one another in a longitudinal direction with a cell wall therebetween and having a outer edge wall on the outer edge surface thereof, wherein each of the porous ceramic members has a filling body which is provided so as to fill in at least one corner portion of at least one outermost cell of the porous ceramic members, a cross-sectional shape of the outermost cell at the face orthogonal to the longitudinal direction of the cells is an almost tetragon, and a cross-sectional shape of the filling body at the face orthogonal to the longitudinal direction of the cells is an almost right triangle

Patent Literature 5 discloses an extrusion die for use in production of a honeycomb molded body including a plurality of cells arranged in parallel with one another in a longitudinal direction with a cell wall therebetween, the extrusion die comprising: a first face; a second face formed opposite to the first face; a material supply section having first through holes extending from the first face to the second face; and a molding section having second through holes extending from the second face to the first face to communicate with the first through holes, wherein the second through holes viewed from the second face form slits in a grid shape, and each first through hole viewed from the first face is formed between adjacent intersections of the slits viewed from the first face, the slits include outermost peripheral slits for molding an outermost peripheral wall of the honeycomb molded body, peripheral slits for molding cell walls of outermost peripheral cells located at an outermost peripheral region of the honeycomb molded body, and inner slits for molding cell walls of inner cells located more inward than the outermost peripheral cells, all projections of an inner grid surrounded by the inner slits viewed from the second face have the same shape that is a substantial rectangle.

### CITATION LIST

### - Patent Literature

Patent Literature 1: WO 2007/058006
Patent Literature 2: JP 2006-21488 A
Patent Literature 3: EP 1 384 508 A1
Patent Literature 4: EP 1 787 969 A
Patent Literature 5: EP 0 402 593 A1

### SUMMARY OF INVENTION

### - Technical problem

Gasoline engines are advantageous in that the exhaust gas temperature is high and the emission of particulates is small compared to diesel engines.

Unfortunately, gasoline engines is less fuel efficient than diesel engines. Thus, for purification of exhaust gas from gasoline engines, filters for purifying the exhaust gas is required to be low-pressure-loss filters.

Such filters are also required to have a large heat capacity because a filter with a small heat capacity tends to rise in temperature, which may cause cracks due to abrupt thermal expansion.

These days, a honeycomb structured body to meet such requirements is being developed. Such a honeycomb structured body is obtained by, in the porous ceramic members forming the honeycomb structured body of Patent Literature 1, further reducing the thickness of the cell walls to reduce the pressure loss and further increasing the thickness of the outer edge wall to increase the heat capacity.

However, when the porous ceramic member to form such a honeycomb structured body is extruded from the die disclosed in Patent Literature 2, the inner slits corresponding to the cell wall portions of the porous ceramic member are too thin, so that the molding material cannot smoothly pass through the slits. This suppresses sufficient mixing of the molding material having passed through a material supply hole and the molding material having passed through a material supply hole adjacent thereto at the slit portion. Thus, voids easily occur at their boundary. Such voids may cause breakage of the cell walls of the extruded honeycomb molded body. Furthermore, if molding material compositions containing high-hardness silicon carbide powder are repeatedly extruded, the inner wall surface of the slits is disadvantageously abraded.

The present invention is made to solve the above problems, and aims to provide an extrusion die capable of supplying the molding material having passed through supply holes uniformly throughout the slits.

### - Solution to problem

To achieve the above aim, the extrusion die of the present invention is an extrusion die for use in production of a honeycomb molded body including a plurality of cells arranged in parallel with one another in a longitudinal direction with a cell wall therebetween, with the cell wall having a thickness of 0.21 mm or less, the extrusion die including a first face, a second face formed opposite to the first face, a material supply section having first through holes extending from the first face to the second face, and a molding section having second through holes extending from the second face to the first face to communicate with the first through holes, wherein the second through holes viewed from the second face form slits in a grid shape, and each first through hole viewed from the first face is formed between adjacent intersections of the slits viewed from the first face.

When each first through hole viewed from the first face is formed between adjacent intersections of the slits viewed from the first face, the molding material having passed through the first through holes (i.e., material supply holes) is first supplied to the second through holes (i.e., slits portions). The molding material then flows along the slits toward the intersection portions of the slits in such a way that it fills the slits. The molding material having passed through a material supply hole and the molding material having passed through a material supply hole adjacent thereto are then mixed together at the intersection portion of the slits and extruded to form a honeycomb shape. The intersection portions of the slits are easier for the molding material to pass through than the slit portions. Therefore, because of sufficient mixing at the intersection portions of the slits, the molding material can be supplied uniformly throughout the slits. The material supply holes and the slits are arranged such that the molding material can be supplied uniformly throughout the slits as mentioned above in the extrusion die of the present invention. Therefore, in a case where the extrusion die of the present invention is used for producing a honeycomb molded body, voids and the like are less likely to occur at the slit portions, and the breakage of the cell walls of the extruded honeycomb molded body can be reduced.

In the extrusion die of the present invention, the second through holes viewed from the second face form the slits in a grid shape, the slits include outermost peripheral slits for molding an outermost peripheral wall of the honeycomb molded body, peripheral slits for molding cell walls of outermost peripheral cells located at an outermost peripheral region of the honeycomb molded body, and inner slits for molding cell walls of inner cells located more inward than the outermost peripheral cells, all projections of an inner grid surrounded by the inner slits viewed from the second face have the same shape that is a substantial rectangle, projections of a peripheral grid located at a region outside the projections of the inner grid excluding corners viewed from the second face each have a shape formed by chamfering or rounding two corners of the shape of the projection of the inner grid, with the chamfered or rounded corners adjacent to the outermost peripheral slits, and the area of each projection of the peripheral grid viewed from the second face is 60 to 80% of the area of each projection of the inner grid viewed from the second face.

Even in an extrusion die of such a shape, the molding material having passed through material supply holes can be supplied uniformly throughout the slits. As a result, a honeycomb molded body in which cell walls have a thickness of 0.21 mm or less can be produced without problems.

Furthermore, a honeycomb structured body in which the pressure loss is low and which has a large heat capacity can be produced by degreasing and firing such a honeycomb molded body to produce a honeycomb fired body and combining multiple such honeycomb fired bodies via an adhesive layer.

In the extrusion die of the present invention, preferably, the minimum value of a slit width of the outermost peripheral slits is 1.5 to 4 times the slit width of the inner slits.

When the minimum value of the slit width of the outermost peripheral slits is 1.5 to 4 times the slit width of the inner slits, a honeycomb structured body having a larger heat capacity can be produced.

If the minimum value of the slit width of the outermost peripheral slits is smaller than 1.5 times the slit width of the inner slits, the resulting honeycomb structured body may have a small heat capacity and also may have a low strength.

If the minimum value of the slit width of the outermost peripheral slits is greater than 4 times the slit width of the inner slits, the outermost peripheral wall of the resulting honeycomb structured body may have an increased thickness to cause an increase in the pressure loss.

In the extrusion die of the present invention, the first through hole viewed from the first face is formed between every two adjacent intersections of the slits.

When the first through hole viewed from the first face is formed between every two adjacent intersections of the slits, the following occurs at every intersection portion of the slits: the molding material having passed through a material supply hole and the molding material having passed through a material supply hole adjacent thereto are mixed together and extruded. As a result, the molding material can be more uniformly supplied throughout the slits.

### BRIEF DESCRIPTION OF DRAWINGS

Fig. 1 is a schematic cross-sectional view of an example of an extrusion die according to a first embodiment of the present invention.
Fig. 2 is a partial enlarged view of the extrusion die shown in Fig. 1 viewed from the second face.
Figs. 3(a) to 3(e) are plan views of examples of the shape of a projection of a peripheral grid viewed from the second face in the extrusion die according to the first embodiment of the present invention.
Fig. 4(a) to 4(d) are plan views of examples of the shape of a projection of a corner peripheral grid viewed from the second face in the extrusion die according to the first embodiment of the present invention.
Fig. 5 is a schematic perspective view of an example of a honeycomb molded body extruded from the extrusion die according to the first embodiment of the present invention.
Fig. 6(a) is a schematic perspective view of an example of a honeycomb fired body produced using the extrusion die according to the present embodiment. Fig. 6(b) is a cross-sectional view of the honeycomb fired body shown in Fig. 6(a) along line M-M.
Fig. 7 is a schematic perspective view of an example of a honeycomb structured body produced using the extrusion die according to the present embodiment.

### DESCRIPTION OF EMBODIMENTS

The embodiments of the present invention are specifically described below. The present invention, however, is not limited to the embodiments below.

### (First embodiment)

An extrusion die according to a first embodiment of the present invention is described below with reference to the drawings.

The extrusion die according to the present embodiment is an extrusion die for use in production of a honeycomb molded body including a plurality of cells arranged in parallel with one another in a longitudinal direction with a cell wall therebetween, with the cell wall having a thickness of 0.21 mm or less, the extrusion die including a first face, a second face formed opposite to the first face, a material supply section having first through holes extending from the first face to the second face, and a molding section having second through holes extending from the second face to the first face to communicate with the first through holes, wherein the second through holes viewed from the second face form slits in a grid shape, and each first through hole viewed from the first face is formed between adjacent intersections of the slits viewed from the first face.

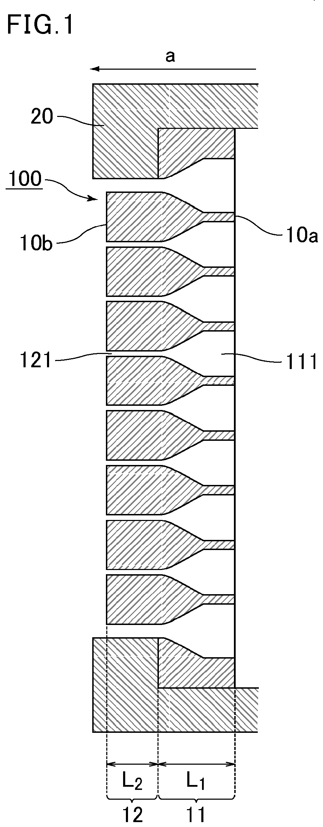

Fig. 1 is a schematic cross-sectional view of an example of an extrusion die according to the first embodiment of the present invention.

The cross-sectional view of Fig. 1 is a cross-sectional view of the extrusion die in the direction parallel to the direction of extrusion of a molding material. In Fig. 1, the direction of extrusion of a molding material is indicated by arrow a.

As shown in Fig. 1, an extrusion die 100 includes a first face 10a and a second face 10b formed opposite to the first face 10a, a material supply section 11 having cylindrical first through holes 111 extending from the first face 10a to the second face 10b, and a molding section 12 having second through holes 121 extending from the second face 10b to the first face 10a to communicate with the first through holes 111. The molding section 12 includes slits including multiple second through holes 121 joined together to form a grid shape.

The material supply section 11 has the first through holes 111 to supply a molding material composition. Thus, the molding material composition is to be supplied through the first through holes 111.

The molding section 12 has the second through holes 121 to mold the molding material composition supplied by the material supply section 11 into the shape of a honeycomb molded body.

An outer frame 20 may be optionally formed around the extrusion die 100 to secure the extrusion die 100.

The length L₁ of the first through holes 111 viewed from the direction perpendicular to the first face 10a is preferably 5 to 10 mm. When the length L₁ of the first through holes 111 is 5 to 10 mm, the molding pressure can be kept in an appropriate range, resulting in a longer life of the extrusion die.

If the length L₁ of the first through holes 111 is shorter than 5 mm, the length L₁ of the first through holes 111 is too short, so that the molding section 12 is subjected to an increased load. This may result in a shorter life of the extrusion die. If the length L₁ of the first through holes 111 is longer than 10 mm, it may difficult to increase the molding speed unless the molding pressure is set high. A forced increase in the molding speed increases the load onto the extrusion die 100, possibly leading to various troubles.

The length L₂ of the second through holes 121 viewed from the direction perpendicular to the second face 10b is preferably 1 to 4 mm. When the length L₂ of the second through holes 121 is 1 to 4 mm, the molding pressure can be kept in an appropriate range, which allows the molded body to have a substantially intended shape.

If the length L₂ of the second through holes 121 is shorter than 1 mm, the second through holes 121 is too short, which makes it difficult for the molded body to have a substantially intended shape. This may result in more defective products. If the length L₂ of the second through holes 121 is longer than 4 mm, it may difficult to increase the molding speed unless the molding pressure is set high. A forced increase in the molding speed increases the load onto the extrusion die 100, possibly leading to various troubles.

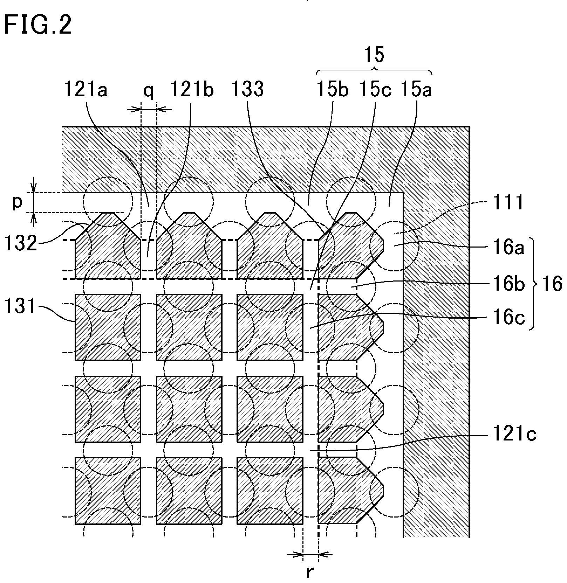

Fig. 2 is a partial enlarged view of the extrusion die shown in Fig. 1 viewed from the second face.

As shown in Fig. 2, the second through holes 121 viewed from the second face 10b form slits in a grid shape, the slits include outermost peripheral slits 121a for molding an outermost peripheral wall of the honeycomb molded body, peripheral slits 121b for molding cell walls between outermost peripheral cells located at the outermost peripheral region of the honeycomb molded body, and inner slits 121c for molding cell walls of inner cells located more inward than the outermost peripheral cells.

The number of intersections 15 is preferably 64516 mm² to 322580 mm² (100 to 500/inch²), more preferably 129032 mm² to 258064 mm² (200 to 400/inch²), where the intersections 15 are the sites at which slits cross each other.

In the following, the outermost peripheral slits 121a, the peripheral slits 121b, and the inner slits 121c are described with reference to Fig. 2.

The outermost peripheral slits 121a are slits for molding an outermost peripheral wall of the honeycomb molded body. Specifically, as shown in Fig. 2, among the slits located more outward than the projections of a peripheral grid 132 and the projections of a corner peripheral grid 133 and the slits located between a projection of the peripheral grid 132 and its adjacent projection of the peripheral grid 132 or the corner peripheral grid 133, a slit whose slit width increases gradually toward the periphery of the extrusion die is the outermost peripheral slit 121a.

The peripheral slits 121b are slits for molding cell walls between outermost peripheral cells located at the outermost peripheral region of the honeycomb molded body. The "cell walls between outermost peripheral cells located at the outermost peripheral region of the honeycomb molded body" herein means cell walls with the same thickness as the cell walls of the inner cells located more inward than the outermost peripheral cells. Specifically, as shown in Fig. 2, among the slits located between a projection of the peripheral grid 132 and its adjacent projection of the peripheral grid 132, a slit with the same slit width as the inner slits 121c is the peripheral slit 121b. At the corners outside the projections of the inner grid 131, the projections of the corner peripheral grid 133 are located. Among the slits located between a projection of the corner peripheral grid 133 and its adjacent projection of the peripheral grid 132, a slit with the same width as the inner slits 121c is also the peripheral slit 121b.

The inner slits 121c are slits for molding cell walls of inner cells located more inward than the outermost peripheral cells. Specifically, as shown in Fig. 2, all the slits located more inward than the projections of the peripheral grid 132 are the inner slits 121c. For example, a slit located between a projection of the inner grid 131 and its adjacent projection of the inner grid 131 is the inner slit 121c. Similarly, a slit located between a projection of the inner grid 131 and its adjacent projection of the peripheral grid 132 is the inner slit 121c.

The minimum value of the outermost peripheral slit width (length P in Fig. 2) is preferably 0.1 to 0.6 mm. The peripheral slit width (length q in Fig. 2) is preferably 0.07 to 0.30 mm. The inner slit width (length r in Fig. 2) is preferably 0.07 to 0.21 mm.

The minimum value of the slit width of the outermost peripheral slits 121a is preferably 1.5 to 4 times the slit width of the inner slits 121c.

All the projections of the inner grid 131 surrounded by the inner slits 121c viewed from the second face 10b have the same shape that is a substantial rectangle α, preferably a square.

The "projections of the inner grid 131 surrounded by the inner slits 121c" herein means projections defined by the innermost lines of the inner slit 121c when viewed from the second face 10b.

The projections of the peripheral grid 132 located at a region outside the projections of the inner grid 131 excluding the corners viewed from the second face 10b each have a shape formed by chamfering or rounding two corners of the shape of the projection of the inner grid 131, with the chamfered or rounded corners adjacent to the outermost peripheral slits 121a. When the projections of the peripheral grid 132 with above shape are arranged in this manner, the outermost peripheral slit width p of the outermost peripheral slits 121a gradually increases toward the periphery of the extrusion die. With such an outermost peripheral slit width p, the extruded honeycomb molded body has a partially thick outermost peripheral wall, and thus has a mechanically robust structure even if the thickness of the cell walls is 0.21 mm or less. Such a honeycomb molded body is sufficiently strong against external shock or the like. In addition, the heat capacity of the honeycomb fired body after degreasing and firing steps is not small.

The "projections of the peripheral grid 132 located at a region outside the projections of the inner grid 131 excluding the corners" herein means projections defined by the innermost lines of the outermost peripheral slits 121a, the peripheral slits 121b, and some inner slits 121c.

As used here in, "shape formed by chamfering or rounding corners" means a shape formed by linearly chamfering or rounding corners of the substantially rectangular projection of the inner grid.

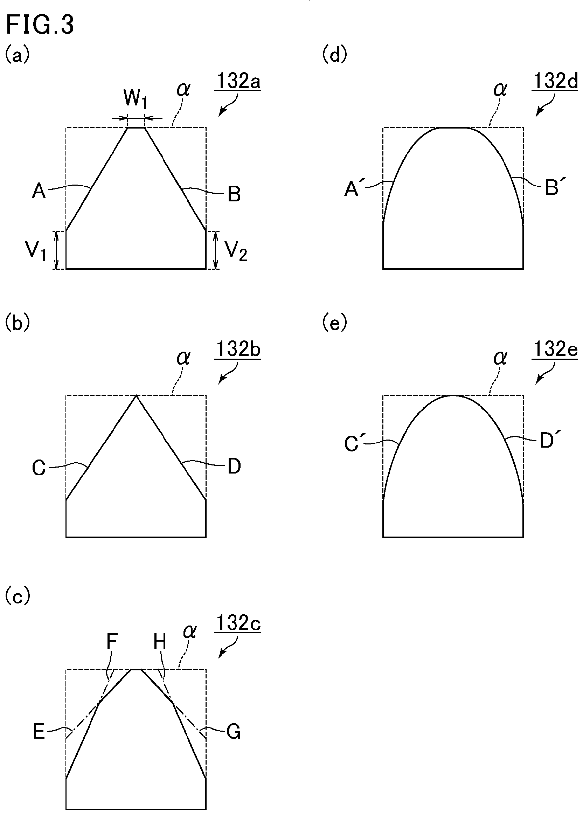

The shape of the projections of the peripheral grid 132 viewed from the second face 10b may have any of the shapes shown in Figs. 3(a) to 3(e).

Figs. 3(a) to 3(e) are plan views of examples of the shape of a projection of a peripheral grid viewed from the second face in the extrusion die according to the first embodiment of the present invention. The dashed lines in Figs. 3(a) to 3(e) show the shape of a projection of the inner grid.

Fig. 3(a) shows the cross-sectional shape of a hexagonal projection of a peripheral grid 132a. In this case, two adjacent corners of the substantial rectangle α are cut by two segments A and B, respectively. The segments A and B are not in direct contact with each other. The segments A and B cross each other outside the substantial rectangle α when extended. A line between the two cut-out corners, which is a portion forming one side of the substantial rectangle α, forms one side of the hexagon.

In Fig. 3(a), the length V₁ and the length V₂ are preferably the same. The lengths of the segments A and B are preferably the same.

Fig. 3(b) shows the cross-sectional shape of a pentagonal projection of a peripheral grid 132b. In this case, two adjacent corners of the substantial rectangle α are cut by two segments C and D, respectively. The segment C and the segment D are in contact with each other on one side of the substantial rectangle α. The segment C and the segment D may cross each other inside the substantial rectangle α. In other words, there is no line as a side of the pentagon between the two cut-out corners.

Fig. 3(c) shows the cross-sectional shape of an octagonal projection of a peripheral grid 132c. In this case, one of two adjacent corners of the substantial rectangle α is cut by segments E and F, and the other corner is cut by segments G and H. The segment E and the segment F cross each other inside the substantial rectangle α. The segment G and the segment H also cross each other inside the substantial rectangle α. A line between the two cut-out corners, which is a portion forming one side of the substantial rectangle α, forms one side of the octagon.

Fig. 3(d) shows the cross-sectional shape of a projection of a peripheral grid 132d. In this case two adjacent corners of the substantial rectangle α are cut by two curves A' and B. The curves A' and B' are curves formed by bending the segments A and B in such a manner that the corners of the substantial rectangle α are rounded. A line between the two cut-out corners, which is a portion forming one side of the substantial rectangle α, forms a portion of the contour of the cross-sectional shape of the projection of the peripheral grid 132d.

Fig. 3(e) shows the cross-sectional shape of a projection of a peripheral grid 132e. In this case two adjacent corners of the substantial rectangle α are cut by two curves C' and D', respectively. The curves C' and D' are curves formed by bending the segments C and D in such a manner that the corners of the substantial rectangle α are rounded. The curve C' and the curve D' are in contact with each other on one side of the substantial rectangle α. The curve C' and the curve D' may cross each other inside the substantial rectangle α.

Preferred among the shapes of the projections of peripheral grid 132 shown in Figs. 3(a) to 3(e) is the shape shown in Fig. 3(d) or Fig. 3(e). When the projections of the peripheral grid 132 have the shape shown in Fig. 3(d) or Fig. 3(e), the outermost peripheral wall of the resulting honeycomb structured body is formed by smooth curves, and thus less likely to become a starting point of cracks. As a result, a honeycomb structured body sufficiently strong against external shock or the like can be produced.

The area of each projection of the peripheral grid 132 is 60 to 80% of the area of each projection of the inner grid 131 viewed from the second face. When the area of each projection of the peripheral grid 132 is 60 to 80% of the area of each projection of inner grid 131 viewed from the second face, the extruded honeycomb molded body has a thick outermost peripheral wall. As a result, through degreasing, firing, and adhering steps, a honeycomb structured body in which the pressure loss is low and which has a large heat capacity can be produced.

Preferably, the projections of the corner peripheral grid 133 are located at the corners outside the projections of the inner grid 131. The projections of the corner peripheral grid 133 may have any shape, but preferably have a shape obtained by chamfering or rounding at least one corner of the shape of the projection of inner grid 131. When the projections of the corner peripheral grid 133 have such a shape, the volume of the region around the outermost peripheral wall of the extruded honeycomb molded body is large. This allows the honeycomb molded body to have a mechanically robust structure even if the thickness of the cell walls is 0.21 mm or less, and to be sufficiently strong against external shock or the like. In addition, the heat capacity of the honeycomb fired body after degreasing and firing steps is not small.

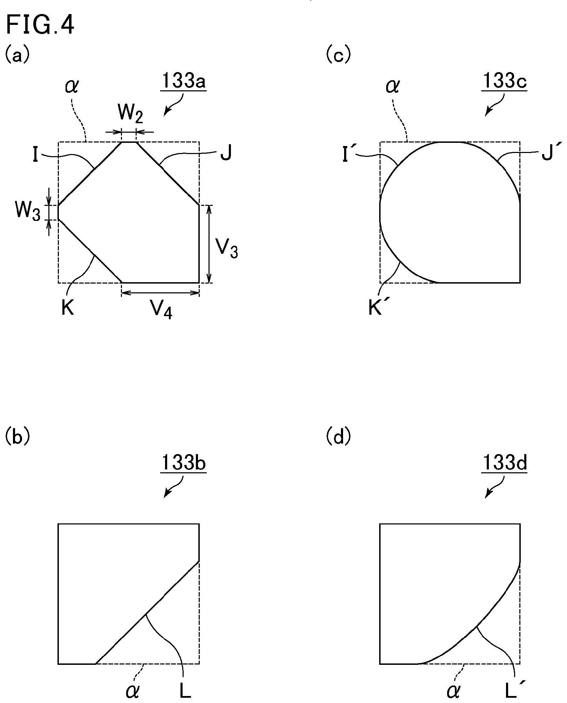

The shape of the projections of the corner peripheral grid 133 viewed from the second face 10b may have any of the shapes shown in Figs. 4(a) to 4(d).

Fig. 4(a) to 4(d) are plan views of examples of the shape of a projection of a corner peripheral grid viewed from the second face in the extrusion die according to the first embodiment of the present invention. The dashed lines in Figs. 4(a) to 4(d) show the shape of a projection of the inner grid.

Fig. 4(a) shows the cross-sectional shape of a heptagonal projection of a corner peripheral grid 133a. In this case, among the corners of the substantial rectangle α, except for one corner located most inward of the extrusion die, three corners are cut by three segments I, J, and K, respectively. The segments I and J are not in direct contact with each other. The segments I and J cross each other outside the substantial rectangle α when extended. Also, the segments I and K are not in direct contact with each other. The segments I and K cross each other outside the substantial rectangle α when extended. Lines between the three cut-out corners, which are portions forming the sides of the substantial rectangle α, form the sides of the heptagon that is the cross-sectional shape of the projection of the corner peripheral grid 133a.

The length V₁ and the length V₂ in Fig. 4(a) are preferably the same. The length W₁ and the length W₂ are preferably the same. Preferably, the segments I and J cross each other at right angles outside the substantial rectangle α and the segments I and K cross each other at right angles outside the substantial rectangle α when extended.

Fig. 4(b) shows the cross-sectional shape of a pentagonal projection of a corner peripheral grid 133b. In this case, among the corners of the substantial rectangle α, one corner located most inward of the extrusion die is cut by a segment L.

Fig. 4(c) shows the cross-sectional shape of a projection of a corner peripheral grid 133c. In this case, among the corners of the substantial rectangle α, except for one corner located most inward of the extrusion die, three corners are cut by three curves I', J', and K', respectively. The curves I', J', and K' are curves formed by bending the segments I, J, and K in such a manner that the corners of the substantial rectangle α are rounded. Lines between the three cut-out corners, which are portions forming the sides of the substantial rectangle α, form portions of the contour of the cross-sectional shape of the projection of the corner peripheral grid 133c.

Fig. 4(d) shows the cross-sectional shape of a projection of a corner peripheral grid 133d. In this case, among the corners of the substantial rectangle α, one corner located most inward of the extrusion die is cut by a curve L'. The curve L' is a curve formed by bending the segment L in such a manner that the corner of the substantial rectangle α is rounded.

Particularly when the shape of the projections of the corner peripheral grid 133 is as shown in Fig. 4(a) or Fig. 4(c) among the shapes of the projections of the corner peripheral grid 133 shown in Figs. 4(a) to 4(d), the honeycomb fired body obtained by extrusion and the subsequent degreasing and firing steps is more resistant to compressive stress. Thus, the honeycomb fired body can be sufficiently strong against external shock or the like.

As shown in Fig. 2, each first through hole 111 viewed from the first face 10a is formed between adjacent intersections of the slits. Preferably, the first through hole 111 is formed between every two adjacent intersections of the slits.

The intersections of the slits, as shown in Fig. 2, refer to an intersection 15a of outermost peripheral slits 121a, an intersection 15b where a peripheral slit 121b, when expanded outwardly, crosses an outermost peripheral slit 121a located more outward than the projections of the peripheral grid 132 and the corner peripheral grid 133, and an intersection 15c of inner slits 121c.

In other words, the first through holes 111 viewed from first face 10a are each centered on a point 16a, 16b, or 16c, where the point 16a is the midpoint of a segment whose endpoints are an intersection 15a and its adjacent intersection 15b; the point 16b is the midpoint of a segment whose endpoints are an intersection 15b and its adjacent intersection 15c; and the point 16c is the midpoint of a segment whose endpoints are an intersection 15c and its adjacent intersection 15c.

The first through holes 111 viewed from the first face 10a may have a circular, polygonal, or other shape, for example. In particular, a circular shape is preferred.

The first through holes 111 viewed from the first face 10a may have any size. The preferred size range is dependent on the total area of the second through holes 121 viewed from the second face 10b, the size of the projections of the inner grid 131 viewed from the second face, and other factors. For example, when the total area of the second through holes 121 viewed from the second face 10b is 3 to 20 mm² and the projections of the inner grid 131 viewed from the second face have a square shape with a side length of 1.8 mm, the circular first through holes 111 preferably has a diameter of 0.3 to 1.0 mm.

The molding material composition is selected according to the constitutional material of the honeycomb molded body (honeycomb structured body) to be produced. Examples of the molding material composition include nitride ceramic such as aluminum nitride, silicon nitride, boron nitride, and titanium nitride, powders of carbide ceramic such as silicon carbide, zirconium carbide, titanium carbide, tantalum carbide, and tungsten carbide, powders of oxide ceramic such as alumina, zirconia, cordierite, mullite, silica, and aluminum titanate. Particularly preferred among these is silicon carbide powder.

The extrusion die is preferably made of a material such as cemented carbide obtained by sintering a mixture of tungsten carbide and cobalt, cemented carbide obtained by sintering a mixture of tungsten carbide, cobalt, and other particles (such as TiC or TiN), tool steel, stainless steel, or aluminum alloy. Cemented carbide obtained by sintering a mixture of tungsten carbide and cobalt is more preferred.

Usually, cemented carbide obtained by sintering a mixture of tungsten carbide and cobalt has a hardness of 1000 to 1500 Hv.

Next, a method for producing the extrusion die according to the present embodiment is described.

The extrusion die according to the present embodiment can be produced by forming first through holes 111 and second through holes 121 in a metal material.

Specifically, as shown in Fig. 1, the first through holes 111 are first formed from the first face 10a toward the second face 10b. Then, the second through holes 121 are formed from the second face 10b toward the first face 10a to communicate with the first through holes 111.

The shape and other properties of the first through holes 111 and second through holes 121 have already been described above, and thus the description thereof is omitted here.

The first through holes 111 and second through holes 121 may be formed by any method. For example, they may be formed with a blade or by electrical discharge machining.

Finally, an example of a method for producing a honeycomb structured body using the extrusion die according to the present embodiment is described below.

The method for producing a honeycomb structured body includes: extruding a molding material from the extrusion die according to the present embodiment to produce a honeycomb molded body including a plurality of cells arranged in parallel with one another in the longitudinal direction with a cell wall therebetween; firing the honeycomb molded body to produce a honeycomb fired body; and forming a ceramic block using at least one honeycomb fired body.
(1) First, a wet mixture (molding material) containing ceramic powder and a binder is prepared.
   Specifically, ceramic powder, an organic binder, a liquid plasticizer, a lubricant, and water are mixed to prepare a wet mixture for producing a honeycomb molded body.
   The ceramic powder is selected according to the constitutional material of the honeycomb molded body (honeycomb structured body) to be produced.
   The main component of the constitutional material of the honeycomb molded body may be, for example, nitride ceramic such as aluminum nitride, silicon nitride, boron nitride, or titanium nitride, carbide ceramic such as silicon carbide, zirconium carbide, titanium carbide, tantalum carbide, or tungsten carbide, or oxide ceramic such as alumina, zirconia, cordierite, mullite, silica, or aluminum titanate.
   The main component of the constitutional material of the honeycomb molded body is preferably non-oxide ceramic, particularly preferably silicon carbide because such components are excellent in properties such as heat resistance, mechanical strength, and thermal conductivity.
   As used herein, the expression "the main component is silicon carbide" means that the ceramic powder contains 60% by weight or more of silicon carbide. When the main component is silicon carbide, the main component may also include silicon-bonded silicon carbide in addition to silicon carbide. The same is true to the case where the main component of the constitutional material is other than silicon carbide.
(2) Next, the wet mixture (molding material) is extruded and dried using a drier such as a microwave drier, a hot air drier, a dielectric drier, a reduced pressure drier, a vacuum drier, or a freeze drier to produce a honeycomb molded body with a predetermined shape.
   Here, the molding material is extruded by using the extrusion die according to the present embodiment.

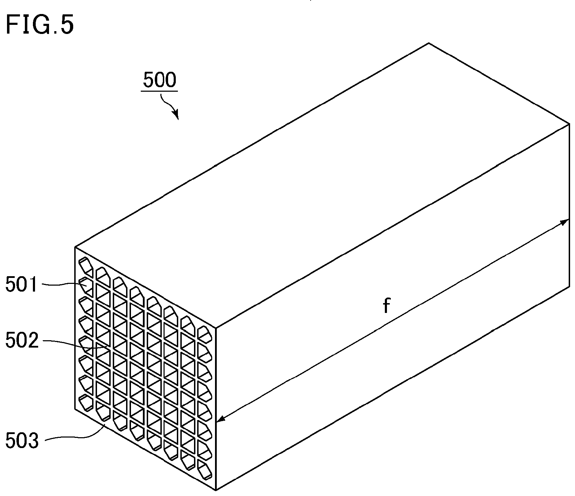

   Fig. 5 is a schematic perspective view of an example of a honeycomb molded body extruded from the extrusion die according to the first embodiment of the present invention. A honeycomb molded body 500 shown in Fig. 5 includes a plurality of cells 501 arranged in parallel with one another in the longitudinal direction (direction of the double-headed arrow "f" in Fig. 5) with a cell wall 502 therebetween. The honeycomb molded body 500 also includes an outermost peripheral wall 503 at the periphery thereof.
(3) Then, under predetermined conditions, the honeycomb molded body is degreased (e.g., 200°C to 500°C) and fired (e.g., 1400°C to 2300°C).
   Through the above steps, a honeycomb fired body can be produced that includes a plurality of cells arranged in parallel with one another in the longitudinal direction with a cell wall therebetween and also includes an outer peripheral wall at the periphery thereof.
   The degreasing and firing of the dried honeycomb molded body can be performed under conditions conventionally employed for producing honeycomb fired bodies.
   According to the method of producing a honeycomb structured body with the extrusion die according to the present embodiment, it is possible to produce a honeycomb fired body in which each cell is plugged at either one end. In this case, in the step (3), after the drying, a predetermined amount of plug material paste as a plug is put in a predetermined end of each cell of the dried honeycomb molded body to plug the cell. The honeycomb molded body is then degreased and fired in the manner as describe above, thereby producing a honeycomb fired body in which each cell is plugged at either one end. The cells may be plugged after firing.
   The plug material paste may be the above wet mixture.

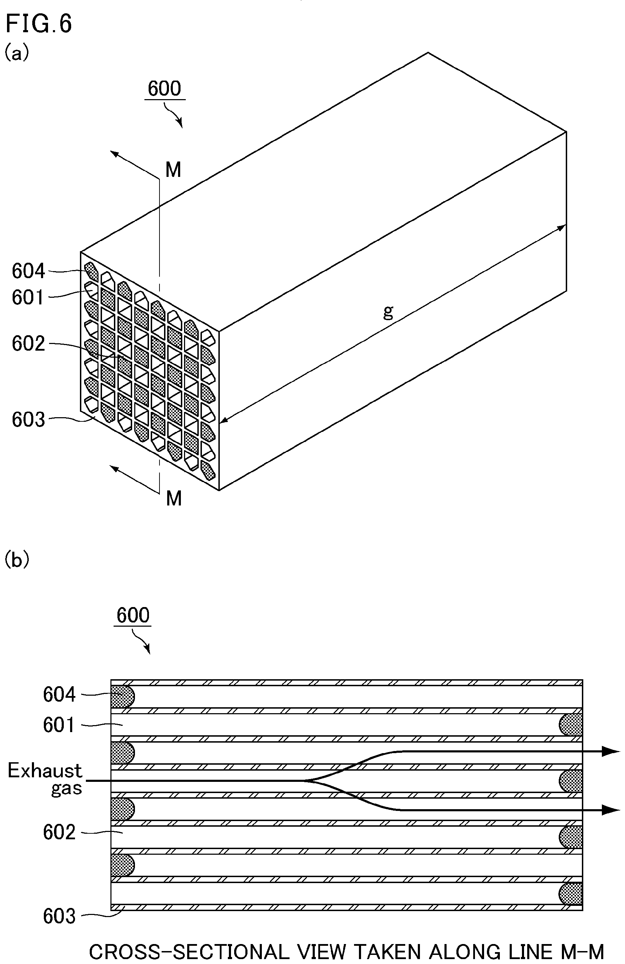

   Fig. 6(a) is a schematic perspective view of an example of a honeycomb fired body produced using the extrusion die according to the present embodiment. Fig. 6(b) is a cross-sectional view of the honeycomb fired body shown in Fig. 6(a) along line M-M.
   A honeycomb fired body 600 shown in Figs. 6(a) and 6(b) includes a plurality of cells 601 arranged in parallel with one another in the longitudinal direction (direction of arrow g in Fig. 6(a)) with a cell wall 602 therebetween. The honeycomb fired body 600 also includes an outermost peripheral wall 603 at the periphery thereof. Each of the cells 601 is plugged at either one end with a plug material 604.
   Accordingly, exhaust gas (in Fig. 6(b), flows of exhaust gas are indicated by arrows) having entered the cells 601 which are open at one end face inevitably passes through the cell walls 602 separating the cells 601, and then flows out of other cells 601 which are open at the other end face. PM (particulate matter) and the like in exhaust gas are captured when exhaust gas passes through the cell walls 602. The cell walls 602 thus serve as a filter.
   Thus, a honeycomb structured body including a honeycomb fired body in which each cell is plugged at either one end can be suitably used as a ceramic filter. A honeycomb structured body including a honeycomb fired body in which the cells are not plugged at either end can be suitably used as a catalyst carrier.
(4) Subsequently, a ceramic block is produced using at least one honeycomb fired body.
   By way of example, a method for producing a ceramic block including multiple honeycomb fired bodies combined together via an adhesive layer is described below.
   First, adhesive paste to form an adhesive layer is applied onto predetermined lateral sides of each honeycomb fired body. On the formed adhesive paste layers, other honeycomb fired bodies are sequentially stacked. This process is repeated to produce an aggregate of honeycomb fired bodies.
   Next, the aggregate of honeycomb fired bodies is heated to dry and solidify the adhesive paste layers, thereby forming adhesive layers. Thus, a ceramic block is produced.
   The adhesive paste may contain an inorganic binder, an organic binder, and inorganic particles, for example. The adhesive paste may further contain inorganic fibers and/or whiskers.
(5) The ceramic block is then cut.
   Specifically, the periphery of the ceramic block is cut with a tool such as a diamond cutter to produce a ceramic block with a round pillar-shaped periphery.
(6) Then, a peripheral coat material paste is applied to the peripheral surface of the round pillar-shaped ceramic block. The paste is solidified by drying to form a peripheral coat layer.

The peripheral coat material paste may be the above adhesive paste. Alternatively, the peripheral coat material may be a paste having a composition different from the adhesive paste.

The peripheral coat layer is optional and is not essential.

The honeycomb structured body can be produced through the above steps.

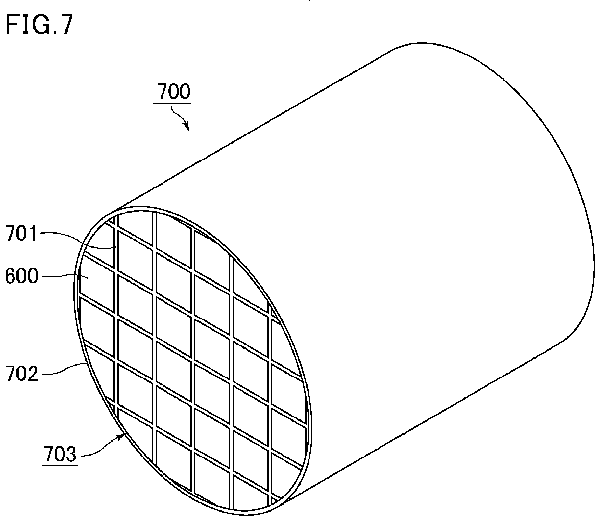

Fig. 7 is a schematic perspective view of an example of a honeycomb structured body produced using the extrusion die according to the present embodiment.

In a honeycomb structured body 700 shown in Fig. 7, multiple honeycomb fired bodies 600 are combined together via an adhesive layer 701 to form a ceramic block 703. A peripheral coat layer 702 is formed at the periphery of the ceramic block 703. Here, the peripheral coat layer is optional.

Such a honeycomb structured body including multiple honeycomb fired bodies combined together is also referred to as an aggregated honeycomb structured body.

In the following, the effects of the extrusion die according to the present embodiment are listed.
(1) In the extrusion die according to the present embodiment, each first through hole viewed from the first face is formed between adjacent intersections of the slits viewed from the first face.
   When each first through hole viewed from the first face is formed between adjacent intersections of the slits viewed from the first face, the molding material having passed through the first through holes (i.e., material supply holes) is first supplied to the second through holes (i.e., slits portions). The molding material then flows along the slits toward the intersection portions of the slits in such a way that it fills the slits. The molding material having passed through a material supply hole and the molding material having passed through a material supply hole adjacent thereto are then mixed together at the intersection portion of the slits and extruded to form a honeycomb shape. The intersection portions of the slits are easier for the molding material to pass through than the slit portions. Therefore, because of sufficient mixing at the intersection portions of the slits, the molding material can be supplied uniformly throughout the slits. The material supply holes and the slits are arranged such that the molding material can be supplied uniformly throughout the slits as mentioned above in the extrusion die of the present invention. Therefore, in a case where the extrusion die of the present invention is used for producing a honeycomb molded body, voids and the like are less likely to occur at the slit portions, and the breakage of the cell walls of the extruded honeycomb molded body can be reduced.
(2) In the extrusion die according to the present embodiment, the second through holes viewed from the second face form slits in a grid shape, the slits include outermost peripheral slits for molding an outermost peripheral wall of the honeycomb molded body, peripheral slits for molding cell walls of outermost peripheral cells located at an outermost peripheral region of the honeycomb molded body, and inner slits for molding cell walls of inner cells located more inward than the outermost peripheral cells, all projections of an inner grid surrounded by the inner slits viewed from the second face have the same shape that is a substantial rectangle, projections of a peripheral grid located at a region outside the projections of the inner grid excluding corners viewed from the second face each have a shape formed by chamfering or rounding two corners of the shape of the projection of the inner grid, with the chamfered or rounded corners adjacent to the outermost peripheral slits, and the area of each projection of the peripheral grid viewed from the second face is 60 to 80% of the area of each projection of the inner grid viewed from the second face.
   Even in an extrusion die of such a shape, the molding material having passed through material supply holes can be supplied uniformly throughout the slits. As a result, a honeycomb molded body in which cell walls have a thickness of 0.21 mm or less can be produced without problems. Furthermore, a honeycomb structured body in which the pressure loss is low and which has a large heat capacity can be produced by degreasing and firing such a honeycomb molded body to produce a honeycomb fired body and combining multiple such honeycomb fired bodies via an adhesive layer.
(3) In the extrusion die according to the present embodiment, preferably, the minimum value of a slit width of the outermost peripheral slits is 1.5 to 4 times the slit width of the inner slits.
   When the minimum value of the slit width of the outermost peripheral slits is 1.5 to 4 times the slit width of the inner slits, a honeycomb structured body having a larger heat capacity can be produced.
   If the minimum value of the slit width of the outermost peripheral slits is smaller than 1.5 times the slit width of the inner slits, the resulting honeycomb structured body may have a small heat capacity and also may have a low strength.
   If the minimum value of the slit width of the outermost peripheral slits is greater than 4 times the slit width of the inner slits, the outermost peripheral wall of the resulting honeycomb structured body may have an increased thickness to cause an increase in the pressure loss.
(4) In the extrusion die according to the present invention, preferably, the first through hole viewed from the first face is formed between every two adjacent intersections of the slits.

When the first through hole viewed from the first face is formed between every two adjacent intersections of the slits, the following occurs at every intersection portion of the slits: the molding material having passed through a material supply hole and the molding material having passed through a material supply hole adjacent thereto are mixed together and extruded. As a result, the molding material can be more uniformly supplied throughout the slits

### EXAMPLES

In the following, examples more specifically disclosing the present embodiment are described. The present invention however should not be limited to these examples.

The examples more specifically describe the first embodiment of the present invention in which the projections of the peripheral grid have the shape shown in Fig. 3(a) and the projections of the corner peripheral grid have the shape shown in Fig. 4(a).

### (Example 1)

### (1) Production of extrusion die

First, cemented carbide obtained by sintering a mixture of tungsten carbide and cobalt was provided as a die material. The die material had a hardness of 1200 Hv.

Next, first through holes and second through holes were formed in the die material with a blade. Specifically, the peripheral portion was first cut such that the second face, in which the second through holes were to be formed, protruded from its surroundings. Next, first through holes with a circular cross-sectional shape were formed from the first face toward the second face. Then, second through holes were formed from the second face toward the first face to communicate with the first through holes.

In the produced extrusion die, the length L₁ of the first through holes viewed from the direction perpendicular to the first face was 8.5 mm, and the length L₂ of the second through holes viewed from the direction perpendicular to the second face was 2 mm. The minimum value of the outermost peripheral slit width p was 0.3048 mm, the peripheral slit width q was 0.1016 mm, and the inner slit width r was 0.1016 mm. In other words, the minimum value of the outermost peripheral slit width p was 3 times the slit width of the inner slit.

The total area of the second through holes viewed from the second face was 4 mm². The projections of the inner grid viewed from the second face had a square shape with a side length of 1.8 mm. The projections of the peripheral grid viewed from the second face had the shape shown in Fig. 3(a), with the lengths V₁ and V₂ being 0.33 mm and the length W₁ being 0.1 mm in Fig. 3(a). The segments A and B had the same length. The projections of the corner peripheral grid viewed from the second face had the shape shown in Fig. 4(a) with the lengths V₃ and V₄ being 0.33 mm and the lengths W₂ and W₃ being 0.1 mm in Fig. 4(a). The segments I and J crossed each other at right angles outside the substantial rectangle α and the segments I and K crossed each other at right angles outside the substantial rectangle α when extended.

The first through hole viewed from the first face was formed between every two adjacent intersections of the slits such that they were each centered on the midpoint of a segment whose endpoints were the intersections of the slits. Each first through hole had a diameter of 0.9 mm.

The second through holes forming the slits were provided in a grid shape to communicate with the first through holes forming the material supply section. The number of intersections of the slits was 129032 mm² (200/inch²).

### (2) Production of honeycomb molded body

### (2-1) Molding material composition preparing step

A mixture was prepared by mixing 52.8% by weight of coarse powder of silicon carbide having an average particle size 22 µm and 22.6% by weight of fine powder of silicon carbide having an average particle size of 0.5 µm. To the mixture were added 4.6% by weight of an organic binder (methylcellulose), 0.8% by weight of lubricant (UNILUB, NOF Corporation), 1.3% by weight of glycerin, 1.9% by weight of a pore-forming material (acrylic resin), 2.8% by weight of oleic acid, and 13.2% by weight of water, followed by mixing to produce a molding material composition.

### (2-2) Extruding step

The extrusion die produced in the above step (1) was mounted to an extrusion molding device, and the molding material composition prepared in the step (2-1) was fed to the extrusion molding device. Subsequently, a molded body was continuously produced at a molding speed of 4000 mm/min, and then cut and dried to produce a honeycomb molded body including a plurality of cells arranged in parallel with one another in the longitudinal direction with a cell wall therebetween.

The length in the longitudinal direction of the produced honeycomb molded body was 12.7 cm. The cross-sectional shape thereof in a plane perpendicular to the longitudinal direction thereof was square. The size was 34.3 mm × 34.3 mm. The minimum thickness of the outermost peripheral wall was 0.3048 mm and the thickness of the cell walls of the inner cells was 0.1016 mm. The honeycomb molded body included 18 × 18 cells. Other dimensions of the obtained honeycomb molded body were also the same as the designed dimensions of the extrusion die produced in the step (1).

### (Comparative Example 1)

The extrusion die was produced in the same manner as in Example 1 except that the first through holes viewed from the first face were formed on the intersections of the slits. Thereafter, a honeycomb molded body was produced using the extrusion die.

### (Evaluation of breakage of cell walls)

A hundred honeycomb molded bodies were produced in each of Example 1 and Comparative Example 1. The cell walls were visually checked for breakage. In Example 1, in which the first through holes viewed from the first face were each formed between adjacent intersections of the slits, the breakage of the cell walls was not observed in any of the honeycomb molded bodies. On the other hand, in Comparative Example 1, in which the first through holes were formed on intersections of the slits, the breakage of the cell walls was found in 45 honeycomb molded bodies.

### (Other embodiments)

The honeycomb structured body produced using the extrusion die according to the first embodiment of the present invention is an aggregated honeycomb structured body, but a honeycomb structured body (integral honeycomb structured body) composed of one honeycomb fired body may be produced.

For the production of an integral honeycomb structured body, a honeycomb molded body is produced in the same manner as in the first embodiment of the present invention, except that the extruded honeycomb molded body is larger in size than the honeycomb molded body described for the first embodiment of the present invention and has a different external form.

In other words, the honeycomb molded body may be produced with an extrusion die which has the same structure as the extrusion die according to the first embodiment of the present invention except that it has a cross-sectional shape corresponding to the shape of the desired honeycomb molded body.

Other steps are performed in the same manner as in the production of the honeycomb structured body described in the first embodiment of the present invention. Here, since the honeycomb structured body is composed of one honeycomb fired body, the aggregate of honeycomb fired bodies does not need to be produced. When a round pillar-shaped honeycomb molded body is produced, the periphery of the ceramic block does not need to be cut.

In the extrusion die according to the embodiments of the present invention, the material supply section of the die body may have any shape. For example, the cross-sectional shape of the material supply section in a plane parallel to the direction of extrusion of the molding material may be rectangular, tapered, or trapezoidal.

In particular, the cross-sectional shape is preferably tapered because in such a case, the molding material is easily extruded.

Similarly, in the extrusion die according to the embodiments of the present invention, the slits of the die body may have any shape. For example, the cross-sectional shape of the slits in a plane parallel to the direction of extrusion of the molding material may be rectangular or tapered.

In particular, the cross-sectional shape is preferably rectangular because in such a case, the slits are easily formed.

It is essential that the extrusion die of the present invention is an extrusion die for use in production of a honeycomb molded body including a plurality of cells arranged in parallel with one another in the longitudinal direction with a cell wall therebetween, with the cell wall having a thickness of 0.21 mm or less, the extrusion die including a first face, a second face formed opposite to the first face, a material supply section having first through holes extending from the first face to the second face, and a molding section having second through holes extending from the second face to the first face to communicate with the first through holes, wherein the second through holes viewed from the second face form slits in a grid shape, and each first through hole viewed from the first face is formed between adjacent intersections of the slits viewed from the first face.

Desired effects can be achieved by appropriately combining the essential feature with various structures specifically described in the first embodiment and other embodiments of the present invention (e.g., integral honeycomb structured body, the shape of the material supply section, the shape of slits).

### REFERENCE SIGNS LIST

10a: first face
10b: second face
11: material supply section
12: molding section
15, 15a, 15b, 15c: intersection
100: extrusion die
111: first through hole
121: second through hole
121a: outermost peripheral slit
121b: peripheral slit
121c: inner slit
131: projection of inner grid
132: projection of peripheral grid
500: honeycomb molded body
501: a plurality of cells
502: cell wall
503: outermost peripheral wall

## Claims

1. An extrusion die (100) for use in production of a honeycomb molded body (500) including a plurality of cells (501) arranged in parallel with one another in a longitudinal direction with a cell wall (502) therebetween, with the cell wall (502) having a thickness of 0.21 mm or less, the extrusion die (100) comprising:
a first face (10a);
a second face (10b) formed opposite to the first face (10a);
a material supply section (11) having first through holes (111) extending from the first face (10a) to the second face (10b); and
a molding section (12) having second through holes (121) extending from the second face (10b) to the first face (10a) to communicate with the first through holes (111),
wherein the second through holes (121) viewed from the second face (10b) form slits in a grid shape, and
each first through hole (111) viewed from the first face (10a) is formed between adjacent intersections (15, 15a, 15b, 15c) of the slits viewed from the first face (10a),
the slits include outermost peripheral slits (121a) for molding an outermost peripheral wall (503) of the honeycomb molded body (500), peripheral slits (121b) for molding cell walls (502) of outermost peripheral cells located at an outermost peripheral region of the honeycomb molded body (500), and inner slits (121c) for molding cell walls (502) of inner cells located more inward than the outermost peripheral cells,
all projections of an inner grid (131) surrounded by the inner slits (121c) viewed from the second face (10b) have the same shape that is a substantial rectangle,
projections of a peripheral grid (132) located at a region outside the projections of the inner grid (131) excluding corners viewed from the second face (10b) each have a shape formed by chamfering or rounding two corners of the shape of the projection of the inner grid (131), with the chamfered or rounded corners adjacent to the outermost peripheral slits (121a), and
the area of each projection of the peripheral grid (132) viewed from the second face (10b) is 60 to 80% of the area of each projection of the inner grid (131) viewed from the second face (10a).

2. The extrusion die (100) according to claim 1,
wherein the minimum value of a slit width of the outermost peripheral slits (121a) is 1.5 to 4 times the slit width of the inner slits (121c).

3. The extrusion die (100) according to claim 1 or 2,
wherein the first through hole (111) viewed from the first face (10a) is formed between every two adjacent intersections (15, 15a, 15b, 15c) of the slits.

## Patentansprüche

1. Extrusionsdüse (100) zur Verwendung bei der Herstellung eines Wabenformkörpers (500) mit einer Vielzahl von Zellen (501), die in Längsrichtung parallel zueinander mit einer Zellwand (502) dazwischen angeordnet sind, wobei die Zellwand (502) eine Dicke von 0,21 mm oder darunter aufweist, wobei die Extrusionsdüse (100) umfasst:
eine erste Fläche (10a);
eine zweite Fläche (10b), die gegenüber der ersten Fläche (10a) ausgebildet ist;
einen Materialzufuhrabschnitt (11) mit ersten Durchgangsöffnungen (111), die sich von der ersten Fläche (10a) zur zweiten Fläche (10b) erstrecken; und
einen Formabschnitt (12) mit zweiten Durchgangsöffnungen (121), die sich von der zweiten Fläche (10b) zur ersten Fläche (10a) erstrecken, um mit den ersten Durchgangsöffnungen (111) zu kommunizieren,
wobei die zweiten Durchgangsöffnungen (121) von der zweiten Fläche (10b) gesehen Schlitze in einer Gitterform bilden, und
jede erste Durchgangsöffnung (111), von der ersten Fläche (10a) gesehen, zwischen benachbarten Schnittpunkten (15, 15a, 15b, 15c) der Schlitze, von der ersten Fläche (10a) gesehen, gebildet ist,
wobei die Schlitze äußerste periphere Schlitze (121a) zum Formen einer äußersten peripheren Wand (503) des Wabenformkörpers (500), periphere Schlitze (121b) zum Formen von Zellwänden (502) von äußersten peripheren Zellen, die in einem äußersten peripheren Bereich des Wabenformkörpers (500) angeordnet sind, und innere Schlitze (121c) zum Formen von Zellwänden (502) von inneren Zellen umfassen, die weiter innen als die äußersten peripheren Zellen angeordnet sind,
alle Projektionen eines inneren Gitters (131), das von den inneren Schlitzen (121c) umgeben ist, von der zweiten Fläche (10b) gesehen, die gleiche Form aufweisen, die im Wesentlichen ein Rechteck ist,
Projektionen eines peripheren Gitters (132), das in einem Bereich außerhalb der Projektionen des inneren Gitters (131) angeordnet ist, weisen mit Ausnahme von Ecken, von der zweiten Fläche (10b) gesehen, jeweils eine Form auf, die durch Abschrägen oder Abrunden von zwei Ecken der Form der Projektion des inneren Gitters (131) gebildet ist, wobei die abgeschrägten oder abgerundeten Ecken an die äußersten peripheren Schlitze (121a) angrenzen, und
die Fläche jeder Projektion des peripheren Gitters (132), von der zweiten Fläche (10b) gesehen, 60 bis 80 % der Fläche jeder Projektion des inneren Gitters (131), von der zweiten Fläche (10a) gesehen, beträgt.

2. Extrusionsdüse (100) nach Anspruch 1,
wobei der Minimalwert einer Schlitzbreite der äußersten peripheren Schlitze (121a) das 1,5- bis 4-fache der Schlitzbreite der inneren Schlitze (121c) beträgt.

3. Extrusionsdüse (100) nach Anspruch 1 oder 2,
wobei die erste Durchgangsöffnung (111), von der ersten Seite (10a) gesehen, zwischen jeweils zwei benachbarten Schnittpunkten (15, 15a, 15b, 15c) der Schlitze gebildet ist.

## Revendications

1. Filière d'extrusion (100) pour une utilisation dans la production d'un corps moulé en nid d'abeille (500) comportant une pluralité de cellules (501) agencées en parallèle les unes avec les autres dans une direction longitudinale avec une paroi cellulaire (502) entre elles, avec l'épaisseur de la paroi cellulaire (502) inférieure ou égale à 0,21 mm, la filière d'extrusion (100) comprenant :
une première face (10a) ;
une deuxième face (10b) constituée à l'opposé de la première face (10a) ;
une section d'alimentation en matériau (11) ayant des premiers trous traversants (111) s'étendant de la première face (10a) à la deuxième face (10b) ; et
une section de moulage (12) ayant des deuxièmes trous traversants (121) s'étendant de la deuxième face (10b) à la première face (10a) pour communiquer avec les premiers trous traversants (111),
dans laquelle les deuxièmes trous traversants (121) vus depuis la deuxième face (10b) constituent des fentes en forme de grille, et
chaque premier trou traversant (111) vu depuis la première face (10a) est constitué entre des intersections adjacentes (15, 15a, 15b, 15c) des fentes vues depuis la première face (10a),
les fentes comportent les fentes périphériques les plus à l'extérieur (121a) pour mouler la paroi périphérique la plus à l'extérieur (503) du corps moulé en nid d'abeille (500), des fentes périphériques (121b) pour mouler des parois cellulaires (502) des cellules périphériques les plus à l'extérieur situées au niveau de la région périphérique la plus l'extérieur du corps moulé en nid d'abeille (500) et des fentes internes (121c) pour mouler des parois cellulaires (502) de cellules internes situées plus vers l'intérieur que les cellules périphériques les plus à l'extérieur,
toutes les saillies d'une grille interne (131) entourées par les fentes internes (121c) vues depuis la deuxième face (10b) ont la même forme qui est un rectangle substantiel,
des saillies d'une grille périphérique (132) situées au niveau d'une région à l'extérieur des saillies de la grille interne (131) à l'exclusion de coins vus depuis la deuxième face (10b) ont chacune une forme constituée en chanfreinant ou en arrondissant deux coins de la forme de la saillie de la grille interne (131), avec les coins chanfreinés ou arrondis adjacents aux fentes périphériques les plus à l'extérieur (121a), et
la surface de chaque saillie de la grille périphérique (132) vue depuis la deuxième face (10b) est de 60 à 80% de la surface de chaque saillie de la grille interne (131) vue depuis la deuxième face (10a).

2. Filière d'extrusion (100) selon la revendication 1,
dans laquelle la valeur minimale d'une largeur de fente des fentes périphériques les plus à l'extérieur (121a) est de 1,5 à 4 fois la largeur de fente des fentes internes (121c).

3. Filière d'extrusion (100) selon la revendication 1 ou 2,
dans laquelle le premier trou traversant (111) vu depuis la première face (10a) est constitué entre toutes les deux intersections adjacentes (15, 15a, 15b, 15c) des fentes.
